# FASCICULE DE BREVET EUROPEEN

(11) **EP 3 654 758 B1**
(45) Date de publication et mention de la délivrance du brevet: **26.01.2022**
(21) Numéro de dépôt: 17768821.5
(22) Date de dépôt: 25.09.2017
(51) Int. Cl.: A01G 17/02

(54) **SYSTEME D'EFFEUILLAGE PNEUMATIQUE ET MACHINE AGRICOLE EQUIPEE D'UN TEL SYSTEME**
PNEUMATISCHES ENTLAUBUNGSSYSTEM UND LANDWIRTSCHAFTLICHE MASCHINE, DIE MIT EINEM SOLCHEN SYSTEM AUSGESTATTET IST
PNEUMATIC LEAF-STRIPPING SYSTEM AND AGRICULTURAL MACHINE EQUIPPED WITH SUCH A SYSTEM

(30) Priorité: 21.07.2017 FR 1756961
(43) Date de publication de la demande: 27.05.2020
(73) Titulaire: Etablissements Collard, 51150 Bouzy (FR)
(72) Inventeur: COLLARD, Yannick, 51150 Bouzy (FR); COLLARD, Corinne, 51150 Bouzy (FR)
(74) Mandataire: Hirsch & Associés
(86) Numéro de dépôt international: PCT/EP2017/074214
(87) Numéro de publication internationale: WO 2019/015787

(56) Documents cités:
- EP-A1- 2 820 940
- FR-A1- 2 543 792
- FR-A1- 2 862 483
- US-A- 4 175 368

## Description

La présente invention concerne un système d'effeuillage pneumatique, ainsi qu'une machine agricole équipée d'un tel système. L'invention trouve notamment une application dans le domaine de la viticulture.

On connaît, en viticulture, des systèmes d'effeuillage pneumatiques tel que celui décrit dans le document FR 2 924 571. Un tel système permet d'effeuiller des ceps de vigne pour éliminer les feuilles masquant les grappes de raisin et les dérobant au rayonnement solaire censé contribuer au mûrissement de ces grappes.

Un tel système d'effeuillage permet également de faciliter l'accès aux grappes, et de les rendre ainsi plus visibles, ce qui est particulièrement important pour la vendange manuelle.

En outre, un tel système a également pour but d'assurer une bonne aération de la végétation, empêchant ou limitant ainsi le développement de maladies, et réduisant de ce fait le besoin de traitement.

Un tel système comprend généralement un carter circulaire pourvu d'un bras destiné à être monté sur une machine agricole, directement ou par l'intermédiaire d'un châssis, le carter étant pourvu de plusieurs fentes semi-circulaires.

Des moyens d'effeuillage pneumatiques sont montés dans le carter, sous la forme d'un ou plusieurs tourniquets chacun pourvus de deux buses de projection d'air comprimé, ces moyens étant reliés à une alimentation en air comprimé.

L'effeuillage est ainsi obtenu par projection d'air depuis les buses en rotation, à travers les fentes dans le carter.

EP 2 820 940 A1, FR 2 862 483 A1, FR 2 543 792 A1 et US 4 175 368 A illustent des exemples de système d'effeuillage pneumatique de ce type.

Un des problèmes rencontrés avec un tel système est que, à vitesse constante du tracteur sur lequel il est monté, et à vitesse constante de rotation des tourniquets, l'intensité d'effeuillage est uniforme sur toute la zone concernée. Or, pour une même zone d'effeuillage, il peut être nécessaire d'effeuiller plus ou moins certaines parties, en fonction d'un certain nombre de paramètres tels que la période de l'année, la maturité des grappes, l'orientation géographique, etc...

En outre, selon la période, il est nécessaire de modifier le type d'effeuillage (effeuillage précoce, effeuillage tardif juste avant vendange). Or, sans intervention manuelle par exemple pour changer la taille des buses, le système n'est pas polyvalent.

L'augmentation du débit d'air comprimé au niveau de l'alimentation du système n'est pas non plus une solution satisfaisante, dans la mesure où elle engendre une dépense d'énergie plus importante, du bruit impactant l'environnement, un risque d'agression plus important sur les grappes et une usure mécanique plus rapide.

Un des buts de l'invention est donc de résoudre notamment les problèmes précités. Ainsi, l'invention a notamment pour objectif de proposer un système d'effeuillage permettant un effeuillage polyvalent, sans changement de pièces, et sans impact négatif sur l'environnement et le coût de fonctionnement.

La présente invention a pour objet un système d'effeuillage pneumatique selon la revendication 1.

Suivant ce mode de réalisation, le système outre la caractéristique précitée comprend une ou plusieurs des caractéristiques suivantes, prise(s) isolément ou suivant toutes les combinaisons techniquement possibles.

Ainsi
- le système comprend des moyens de blocage aptes, dans une configuration de blocage, à bloquer le carter dans l'une ou l'autre des deux positions angulaires distinctes, et dans une configuration de déblocage, à permettre au carter de passer de l'une à l'autre des deux positions angulaires distinctes par rotation autour de l'axe passant par la jonction.
- le système comprend un élément longitudinal de longueur variable, tel qu'un vérin hydraulique, apte à changer de longueur pour faire passer le carter de l'une à l'autre des deux positions angulaires distinctes.
- le système comprend en outre un carter apte à passer de l'une à l'autre des deux positions angulaires distinctes automatiquement à partir d'une commande.

La présente invention a également pour objet une machine agricole selon la revendication 5, tel qu'un tracteur, comprenant un châssis de montage d'un équipement annexe, comprenant au moins un système d'effeuillage selon la revendication 1 monté sur le châssis par l'intermédiaire du bras.

Le système selon la présente invention comprend en outre des moyens de réglage de l'intensité d'effeuillage configurés pour permettre l'effeuillage d'une zone à effeuiller déterminée selon au moins deux intensités d'effeuillage distinctes, en sorte que l'effeuillage selon l'une des deux intensités d'effeuillage retire une plus grande quantité de feuilles ou morceaux de feuilles de la zone à effeuiller déterminée que ne le permet l'effeuillage selon l'autre des deux intensités d'effeuillage.

Un tel système permet donc notamment d'obtenir un effeuillage polyvalent, selon des intensités d'effeuillage différentes, pour retirer une plus ou moins grande quantité de feuilles ou morceaux de feuilles d'une zone à effeuiller, en fonction d'un certain nombre de paramètres, sans avoir à intervenir pour changer une pièce du système, ni à faire varier le débit d'alimentation en air comprimé ou la vitesse de déplacement de la machine sur laquelle est montée le système.

Dans le mode de réalisation selon la présente invention, les moyens de réglage comprennent un joint tournant et des moyens de mise en rotation du carter. D'autre part, le bras présente un axe longitudinal principal et comprend la conduite d'alimentation et une pièce de fixation destinée à être montée sur la machine agricole directement ou par l'intermédiaire d'un châssis, la conduite d'alimentation étant guidée le long de la pièce de fixation et reliée aux moyens d'effeuillage à travers une jonction dans le carter par l'intermédiaire du joint tournant, les moyens de mise en rotation étant configurés pour permettre la mise rotation du carter autour d'un premier axe passant par la jonction et sensiblement perpendiculaire à l'axe longitudinal principal du bras, entre au moins deux positions angulaires distinctes par rapport audit premier axe, en sorte de permettre de modifier la position des moyens d'effeuillage par rapport au bras sans gêner l'alimentation des moyens d'effeuillage en air comprimé, entre une première position correspondant à l'une des deux intensités d'effeuillage et une deuxième position correspondant à l'autre des deux intensités d'effeuillage.

La mise en rotation du carter, ou tête d'effeuillage, permet notamment de faire varier les dimensions de la zone de travail, donc la quantité de feuille ou de morceaux de feuilles effeuillés dans une zone d'effeuillage déterminée. Elle permet également de pénétrer dans ou contre la végétation à effeuiller de différentes manières en fonction de l'angle d'inclinaison de la tête d'effeuillage, ce qui permet d'adapter le travail au type de végétation et au type d'effeuillage requis.

Dans un mode de réalisation selon la présente invention, les moyens d'effeuillage comprennent au moins deux buses de projection d'air comprimé de diamètres différents, et en ce que les moyens de réglage comprennent un sélecteur pouvant prendre une première et une deuxième positions dans lesquelles il est apte à orienter le flux d'air comprimé en provenance de la conduite d'alimentation exclusivement vers une première, respectivement une deuxième, des deux buses, en sorte que lorsque le flux d'air est orienté vers l'une des deux buses, l'effeuillage est effectué selon l'une des deux intensités d'effeuillage, et lorsque le flux d'air est orienté vers l'autre des deux buses, l'effeuillage est effectué selon l'autre des deux intensités d'effeuillage.

L'utilisation d'au moins deux buses de diamètres différents et d'un sélecteur exclusif permet notamment de modifier facilement la force avec laquelle le flux d'air est projeté sur la zone à effeuiller, et donc la quantité de feuille ou de morceaux de feuilles effeuillés dans une zone d'effeuillage déterminée. Le sélecteur permet de modifier facilement la buse utilisée pour l'effeuillage, sans avoir à démonter la buse pour la remplacer par une autre.

Suivant certaines variantes, le système comprend en outre une ou plusieurs des caractéristiques suivantes, prise(s) isolément ou suivant toutes les combinaisons techniquement possibles:
- le sélecteur comprend une vanne présentant au moins une sortie apte à communiquer alternativement, par rotation de la vanne autour d'un axe central, avec l'une ou l'autre des deux buses dans la première, respectivement la deuxième, position du sélecteur;
- la rotation de la vanne est activable par l'intermédiaires de moyens d'activation, manuellement et/ou automatiquement par l'intermédiaire d'une commande;
- le sélecteur comprend deux sorties distinctes, chacune communiquant avec l'une des deux buses, un clapet étant disposé entre chacune des sorties et chacune des buses et chacun de ces clapets étant commandé manuellement et/ou automatiquement, par l'intermédiaire de moyens de commande, pour boucher l'une ou l'autre des sorties, donc rendre inactive l'une ou l'autre des deux buses.

Les caractéristiques et avantages de l'invention apparaitront à la lecture de la description qui va suivre, donnée uniquement à titre d'exemple, et non limitative, en référence aux figures annexées suivantes:
- figure 1: représentation schématique d'un premier exemple de système d'effeuillage selon l'invention, en perspective, côté face d'effeuillage ;
- figures 2 et 3: représentations schématique du système d'effeuillage de la figure 1, vue côté opposé à la face d'effeuillage, respectivement en positions horizontale et verticale du carter 2 ;
- figure 4: représentation schématique d'un deuxième exemple de système d'effeuillage selon l'invention, en perspective, côté opposé à la face d'effeuillage ;
- figures 5 et 6: représentations schématique du système d'effeuillage de la figure 1, vue côté face d'effeuillage, respectivement en positions horizontale et verticale du carter 2 ;
- figure 7: représentation schématique de la zone de travail du système des figures 5 et 6;
- figure 8: représentation schématique d'une partie des moyens d'effeuillage 8, 9 à l'intérieur du carter 2 des figures précédentes ;
- figure 9: représentation schématique de deux systèmes d'effeuillage selon l'invention montés sur un châssis de montage d'équipement annexe pour machine agricole.

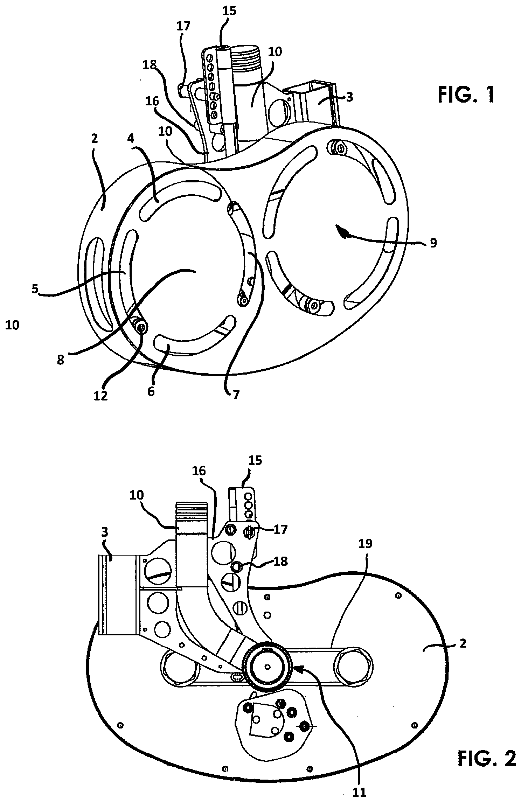

Le système d'effeuillage pneumatique illustré sur les figures 1 à 9 comprend notamment un carter 2, de forme d'ensemble en haricot. Alternativement, la forme d'ensemble du carter 2 peut être ovale. A l'intérieur du carter 2 sont montés deux moyens d'effeuillage 8, 9 pneumatiques.

Le carter 2 est pourvu d'un bras 3, destiné à être monté sur une machine agricole, tel qu'un tracteur agricole, directement ou par l'intermédiaire d'un châssis 1 tel que représenté sur la figure. Précisément, sur cette figure, deux systèmes d'effeuillage comprenant chacun un carter 2 et un bras 3 (la pièce 16 n'étant pas représentée sur la figure), sont montés sur le châssis 1.

Le carter 2 est pourvu d'au moins une ouverture circulaire 4 sur sa face d'effeuillage, c'est-à-dire la face du carter 2 destinée à être orientée vers la végétation à traiter. Dans l'exemple représenté sur les figures, le carter 2 est pourvu de deux fois quatre ouvertures circulaires 4, soit quatre ouvertures pour chaque moyen d'effeuillage 8 et 9.

D'une façon générale, un exemple de moyens d'effeuillage 8, 9 est donné dans le document FR 2 924 571. Dans ce document, les moyens d'effeuillage 8, 9 sont logés dans un carter de forme d'ensemble circulaire et on peut considérer qu'ils sont aptes à être logés dans le carter 2 selon l'invention même lorsqu'il est de forme non circulaire. Ils comprennent un tourniquet entraîné en rotation par un moteur, ce tourniquet entraînant à son tour en rotation des buses de projection d'air comprimé. L'homme du métier pourra se référer aux détails des modes de réalisation décrits dans le document FR 2 924 571.

Une conduite d'alimentation 10 est prévue pour alimenter les moyens d'effeuillage 8, 9 en air comprimé, permettant l'effeuillage par projection d'air comprimé par ces moyens d'effeuillage 8, 9 au travers de la ou des ouvertures circulaires 4 à 7 dans le carter 2.

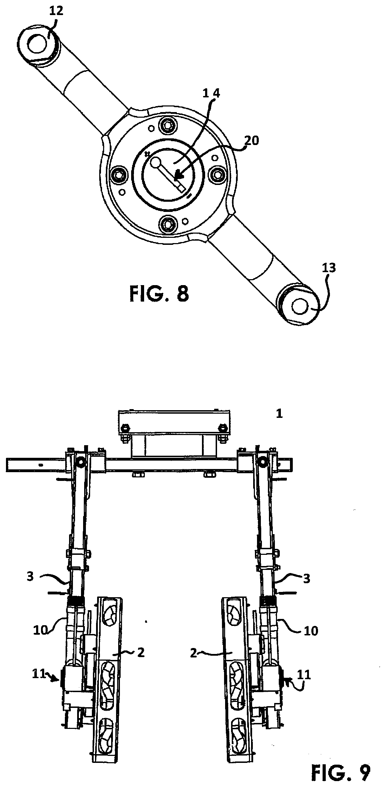

Selon un mode de réalisation préféré de l'invention, le bras 3, comprend la conduite d'alimentation 10 ainsi qu'une première pièce de fixation destinée à être montée sur la machine agricole directement, ou par l'intermédiaire d'un châssis tel que le châssis 1 représenté sur la figure 9.

Des moyens de réglage de l'intensité d'effeuillage sont prévus. Ces moyens sont configurés pour permettre l'effeuillage d'une zone à effeuiller déterminée selon deux ou plus intensités d'effeuillage distinctes. L'effeuillage selon l'une des deux intensités d'effeuillage retire une plus grande quantité de feuilles ou morceaux de feuilles de la zone à effeuiller déterminée que ne le permet l'effeuillage selon l'autre des deux intensités d'effeuillage.

Dans les exemples illustrés sur les figures 1 à 7, les moyens de réglage comprennent un joint tournant 11 et des moyens de mise en rotation 15 du carter 2.

La conduite d'alimentation 10 est guidée le long de la pièce de fixation, et reliée aux moyens d'effeuillage 8, 9 à travers une jonction 11 dans le carter 2 par l'intermédiaire du joint tournant 11 (la même référence numérique 11 est utilisée pour le joint tournant et la jonction pour simplifier les figures). La jonction 11 est fixée par des moyens de fixation 19 au carter 2.

Le bras 3, en particulier la conduite 10, présente un axe longitudinal principal, avant de se courber vers la jonction 11.

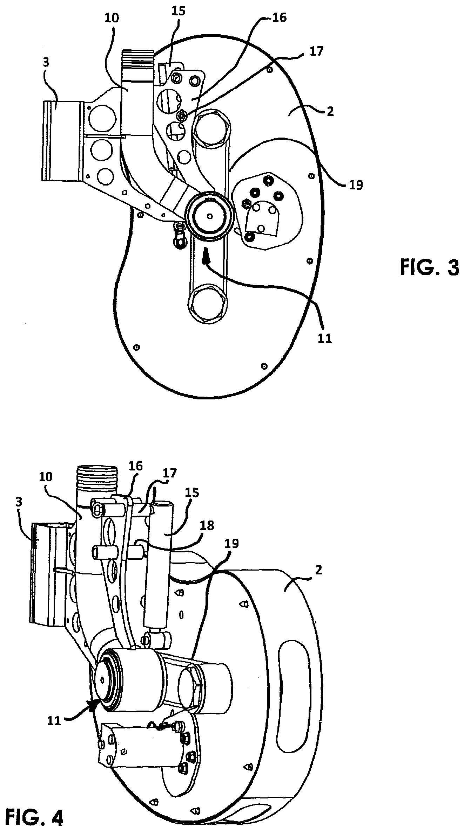

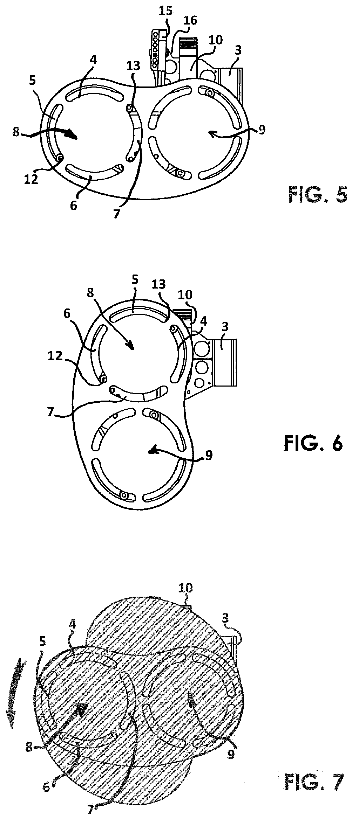

Les moyens de mise en rotation 15 sont configurés pour permettre la mise rotation du carter 2 autour d'un premier axe passant par la jonction 11 et sensiblement perpendiculaire à l'axe longitudinal principal du bras 3. Cette rotation peut se faire entre au moins deux positions angulaires distinctes par rapport au premier axe. Dans l'exemple illustré sur les figures 1 à 7, l'amplitude de rotation est de 90°, entre une première position angulaire dans laquelle le carter 2, formant une tête d'effeuillage, est sensiblement orienté horizontalement, tel qu'illustré sur les figures 1, 2, 4, et 5, et une deuxième position angulaire dans laquelle le carter 2 est sensiblement orienté verticalement, tel qu'illustré sur les figures 3 et 6.

Ainsi, la mise en rotation du carter 2 permet de modifier la position des moyens d'effeuillage 8, 9 par rapport au bras 3, sans gêner l'alimentation des moyens d'effeuillage 8, 9 en air comprimé par l'intermédiaire de la conduite 10, entre une première position correspondant à l'une des deux intensités d'effeuillage distinctes et une deuxième position correspondant à l'autre de ces deux intensités d'effeuillage distinctes.

Dans les exemples illustrés sur les figures 1 à 7, les moyens de mise en rotation 15 comprennent un élément longitudinal Celui-ci s'étend entre un premier point de fixation non rigide au carter 2, et au moins un deuxième point de fixation au bras 3.

Le premier point de fixation est situé à une distance non nulle de l'axe passant par la jonction 11.

Dans l'exemple illustré sur les figures 1, 2, 3, 5 et 6, le deuxième point de fixation peut prendre au moins deux positions distinctes par rapport au bras 3, précisément par rapport à une deuxième pièce de fixation 16 de ce bras 3, correspondant aux deux positions angulaires distinctes du carter 2.

La liaison au niveau du premier point de fixation autorise au moins la rotation de l'élément longitudinal par rapport au carter 2 selon un deuxième axe parallèle au premier axe.

Ainsi, en modifiant la position de l'élément longitudinal par rapport au bras 3, on met en rotation cet élément longitudinal par rapport au carter 2 au niveau du premier point de fixation, ce qui engendre la rotation du carter 2 lui-même autour de l'axe passant par la jonction 11, et donc le passage du carter 2 de l'une à l'autre des deux positions angulaires mentionnées plus haut.

Le changement de position du deuxième point de fixation est réalisé manuellement, en débloquant des moyens de déblocage 17, 18 qui seront décrits plus loin. Dans l'exemple illustré sur la figure 4, l'élément longitudinal est de longueur variable. Il peut s'agir par exemple d'un vérin hydraulique Cet élément longitudinal est donc apte à changer de longueur, le changement de longueur permettant de faire passer le carter 2 de l'une à l'autre des deux positions angulaires distinctes mentionnées plus haut.

Le changement de longueur de l'élément longitudinal de longueur variable peut être actionné automatiquement par une commande appropriée, située à proximité de l'élément longitudinal ou à distance de celui-ci. Ainsi, le passage du carter 2 de l'une à l'autre des deux positions angulaires distinctes peut être obtenu de manière automatique à partir de cette commande.

Les moyens de blocage 17, 18 évoqués plus haut permettent, dans une première configuration dite de blocage, de bloquer le carter 2 dans l'une ou l'autre des deux positions angulaires distinctes, et dans une deuxième configuration dite de déblocage, d'autoriser le carter 2 à passer de l'une à l'autre des deux positions angulaires distinctes par rotation autour de l'axe passant par la jonction 11.

Par exemple, tel qu'illustré sur les figures 1, 2, 3, 5 et 6, ces moyens de blocage 17, 18 peuvent prendre la forme d'une pièce de blocage 17 qui coopère avec un orifice dans la deuxième pièce de fixation 16 du bras 3.

Au moins deux orifices sont prévus dans la deuxième pièce de fixation 16, qui correspondent aux deux positions du deuxième point de fixation entre l'élément longitudinal et le bras 3, 10, 16 mentionné plus haut.

En retirant manuellement la pièce de blocage 17 d'un premier des deux orifices dans la deuxième pièce de fixation 16, on libère l'élément longitudinal de sa liaison avec le bras 3, pour permettre la mise en rotation du carter 2 décrite plus haut. Une fois la position souhaitée du carter 2 atteinte, on replace la pièce de blocage 17 à travers un deuxième des deux orifices dans la deuxième pièce de fixation 16, pour bloquer le carter 2 dans cette deuxième position.

Une deuxième pièce de blocage 18 coopérant avec un autre orifice dans la deuxième pièce de fixation 16 peut être prévue, pour renforcer le blocage et/ou stabiliser la position de l'élément longitudinal le long du bras 3.

Les figures 5 et 6 représentent à titre d'exemple non limitatif de système d'effeuillage respectivement en positions horizontale et verticale du carter 2, et la figure 7 montre, hachurée, la zone de travail du système d'effeuillage décrite lors du passage de l'une à l'autre des deux positions.

Ainsi, en changeant la position du carter 2, on obtient plusieurs, au moins deux intensités d'effeuillage en termes de quantité de feuilles ou de morceaux de feuilles retirés de cette zone. En effet, lorsque le système se déplace horizontalement entraîné par une machine agricole, la bande balayée par le carter 2 en position horizontale (figure 5) présente une superficie inférieure à celle de la bande balayée par le carter 2 en position verticale (figure 6).

Tel que visible sur les figures 1, 5 et 6, chacun des moyens d'effeuillage 8, 9 et comprend au moins deux buses 12, 13 de projection d'air comprimé.

Ces buses 12, 13 sont visibles plus en détail sur la figure. Dans ce mode de réalisation de la figure 8, les deux buses présentent chacune un diamètre intérieur différent.

Dans ce mode de réalisation, les moyens de réglage de l'intensité d'effeuillage comprennent un sélecteur 14 pouvant prendre une première et une deuxième positions dans lesquelles il est apte à orienter le flux d'air comprimé en provenance de la conduite d'alimentation 10 exclusivement vers une première 12, respectivement une deuxième 13, des deux buses 12, 13.

Ainsi, le flux d'air provenant de la conduite d'alimentation 10 est orienté vers l'une des deux buses 12, 13, l'effeuillage est effectué selon l'une première intensité d'effeuillage, et lorsque le flux d'air est orienté vers l'autre des deux buses 12, 13, l'effeuillage est effectué selon une autre intensité d'effeuillage.

En effet, en fonction du diamètre de la buse 12, 13 alimentée en air comprimé, la force du flux d'air projeté sur une zone d'effeuillage déterminée sera plus ou moins grande, et l'intensité d'effeuillage en termes de quantité de feuilles ou de morceaux de feuilles retirée de cette zone sera plus ou moins grande.

Dans une variante de réalisation, le sélecteur 14 comprend une vanne 14 présentant au moins une sortie apte à communiquer alternativement avec l'une ou l'autre des deux buses 12, 13 dans la première, respectivement la deuxième, position du sélecteur 14.

Pour ce faire, la vanne 14 est apte à être mise en rotation autour d'un axe central. Cette mise en rotation peut être obtenue par des moyens d'activation 20, par exemple une fente dans laquelle on insère manuellement un outil approprié pour entraîner la vanne 14 en rotation.

D'autres moyens d'activation sont bien évidemment possibles, actionnables manuellement et/ou automatiquement par l'intermédiaire d'une commande située à proximité ou à distance.

Dans une autre variante de réalisation, le sélecteur comprend deux sorties distinctes communiquant chacune avec l'une des deux buses, un clapet étant disposé entre chacune desdites sorties et chacune des buses. Chacun de ces clapets est commandé par l'intermédiaire de moyens de commande, à fonctionnement manuel et/ou automatique, en vue de boucher l'une ou l'autre des sorties, donc de façon à rendre inactive l'une ou l'autre des deux buses.
Ainsi, lorsque le flux d'air est orienté vers l'une des deux buses, l'effeuillage est effectué selon l'une des deux intensités d'effeuillage, et lorsque le flux d'air est orienté vers l'autre des deux buses, l'effeuillage est effectué selon l'autre des deux intensités d'effeuillage.

La présente description est donnée à titre d'exemple et n'est pas limitative de l'inventior qui est défini par le jeu de revendications annexé.

En particulier, le système d'effeuillage selon l'invention est principalement destiné à l'effeuillage de la vigne, mais peut tout aussi bien être utilisé dans d'autres domaines de l'agriculture dans lesquels un effeuillage similaire est utile.

## Revendications

1. Système d'effeuillage pneumatique, notamment pour effeuiller des ceps de vigne, destiné à être monté sur une machine agricole tel qu'un tracteur, et comprenant:
- un carter (2) pourvu d'un bras (3) destiné à être monté sur la machine agricole directement ou par l'intermédiaire d'un châssis (1), comprenant des moyens d'effeuillage (8, 9) pneumatiques fixes pourvus chacun d'au moins une ouverture circulaire formée de quatre ouvertures (4 à 7),
- une conduite d'alimentation (10) apte à alimenter en air comprimé les moyens d'effeuillage (8, 9), et ainsi de permettre l'effeuillage (8, 9) par projection d'air comprimé par les moyens d'effeuillage au travers de l'ouverture (4 à 7) dans le carter (2), des moyens de réglage comprenant un joint tournant (11) et des moyens de mise en rotation (15) du carter (2), et
- le bras (3) présentant un axe longitudinal principal et comprenant la conduite d'alimentation (10) et une pièce de fixation du bras (3) destinée à être montée sur la machine agricole directement ou par l'intermédiaire d'un châssis (1),
- ladite conduite d'alimentation (10) étant est- guidée le long de ladite pièce de fixation du bras (3) et reliée aux moyens d'effeuillage (8, 9) à travers une jonction dans le carter (2) par l'intermédiaire dudit joint tournant (11),
- les moyens de mise en rotation (15) étant configurés pour permettre la mise en rotation du carter (2) autour d'un premier axe passant par ladite jonction et sensiblement perpendiculaire à l'axe longitudinal principal du bras (3) entre au moins deux positions angulaires distinctes par rapport audit premier axe,
- les moyens de mise en rotation (15) comprenant un élément longitudinal s'étendant entre un premier point de fixation non rigide au carter (2) situé à une distance non nulle de l'axe passant par la jonction, et au moins un deuxième point de fixation au bras (3), le deuxième point de fixation pouvant prendre au moins deux positions distinctes correspondant aux deux positions angulaires distinctes du carter (2), et la liaison au niveau du premier point de fixation autorisant au moins la rotation de l'élément longitudinal (15) par rapport au carter (2) selon un deuxième axe parallèle au premier axe.

2. Système selon la revendication 1, **caractérisé en ce qu'**il comprend des moyens de blocage (17, 18) aptes, dans une configuration de blocage, à bloquer le carter (2) dans l'une ou l'autre des deux positions angulaires distinctes, et dans une configuration de déblocage, à permettre au carter (2) de passer de l'une à l'autre des deux positions angulaires distinctes par rotation autour de l'axe passant par la jonction.

3. Système selon l'une quelconque des revendications 1 ou 2 , **caractérisé en ce que** l'élément longitudinal des moyens de mise en rotation (15) est de longueur variable, tel qu'un vérin hydraulique, apte à changer de longueur pour faire passer le carter (2) de l'une à l'autre des deux positions angulaires distinctes.

4. Système selon l'une quelconque des revendications 1 à 3, **caractérisé en ce que** le carter (2) est apte à passer de l'une à l'autre des deux positions angulaires distinctes automatiquement à partir d'une commande.

5. Machine agricole, tel qu'un tracteur, comprenant un châssis (1) de montage d'un équipement annexe, **caractérisé en ce qu'**il comprend au moins un système d'effeuillage selon l'une quelconque des revendications précédentes monté sur le châssis (1) par l'intermédiaire du bras (3).

## Patentansprüche

1. Pneumatisches Blattabstreifsystem, insbesondere zum Entfernen von Blättern von Reben, das dazu bestimmt ist, an einer landwirtschaftlichen Maschine wie einem Traktor angebracht zu werden, und bestehend aus:
- ein Gehäuse (2), das mit einem Arm (3) versehen ist, der dazu bestimmt ist, direkt oder über einen Rahmen (1) an der landwirtschaftlichen Maschine angebracht zu werden, mit festen pneumatischen Blattabstreifmitteln (8, 9) mit jeweils mindestens einer kreisförmigen Öffnung aus vier Öffnungen (4 bis 7),
- ein Versorgungsrohr (10), das den Blattabstreifmitteln (8, 9) Druckluft zuführen und somit das Blattabstreifen (8, 9) durch Einsprühen von Druckluft durch die Blattabstreifmittel durch die Öffnung (4 bis 7) ermöglichen kann im Gehäuse (2),
- Einstellmittel mit einem Drehgelenk (11) und Mitteln zum Drehen (15) des Gehäuses (2),
- wobei der Arm (3) eine Hauptlängsachse hat und das Versorgungsrohr (10) und ein Armbefestigungsteil (3) umfasst, das dazu bestimmt ist, direkt oder über einen Rahmen (1) an der landwirtschaftlichen Maschine montiert zu werden,
- wobei das Zuführungsrohr (10) entlang des Armbefestigungsteils (3) geführt und mit den Abstreifmitteln (8, 9) durch eine Verbindungsstelle im Gehäuse (2) über das Drehgelenk (11) verbunden ist,
- wobei die Drehmittel (15) so konfiguriert sind, dass sie die Drehung des Gehäuses (2) um eine erste Achse ermöglichen, die durch die Verbindung verläuft und im Wesentlichen senkrecht zur Hauptlängsachse des Arms (3), zwischen mindestens zwei unterschiedlichen Winkelpositionen relativ zu der ersten Achse,
- wobei das Drehmittel (15) ein Längselement umfasst, das sich zwischen einem ersten nicht starren Befestigungspunkt an dem Gehäuse (2) erstreckt, der sich in einem Abstand ungleich Null von der durch die Verbindung verlaufenden Achse befindet, und mindestens einem zweiten Befestigungspunkt an der Arm (3), wobei der zweite Befestigungspunkt mindestens zwei unterschiedliche Positionen einnehmen kann, die den zwei unterschiedlichen Winkelpositionen des Gehäuses (2) entsprechen, und die Verbindung am ersten Befestigungspunkt zumindest eine Drehung des Längselement bezüglich des Gehäuses (2) um eine zweite Achse parallel zur ersten Achse ermöglicht.

2. System nach Anspruch 1, **dadurch gekennzeichnet, dass** es Verriegelungsmittel (17, 18) umfasst, die in einer Verriegelungskonfiguration das Gehäuse (2) in der einen oder der anderen der zwei unterschiedlichen Winkelpositionen blockieren kann und in einer Freigabekonfiguration das Gehäuse (2) von einer oder der anderen der zwei unterschiedlichen Winkelpositionen übergehen lassen kann, durch Drehung um eine Achse, die durch die Verbindung geht.

3. System nach einem der Ansprüche 1 oder 2, **dadurch gekennzeichnet, dass** das Längselement des Drehmittels (15) von variabler Länge ist, wie beispielsweise ein Hydraulikzylinder, der in der Lage ist, seine Länge zu ändern, um das Gehäuse (2) von einer der beiden unterschiedlichen Winkelpositionen in die andere zu bewegen.

4. System nach einem der Ansprüche 1 bis 3, **dadurch gekennzeichnet, dass** das Gehäuse (2) in der Lage ist, automatisch über Steuermittel von einer zur anderen der beiden unterschiedlichen Winkelpositionen umzuschalten.

5. Landwirtschaftliche Maschine, wie ein Traktor, mit einem Rahmen (1) zum Anbau von Zusatzgeräten, **dadurch gekennzeichnet, dass** sie mindestens ein Blattabstreifsystem nach einem der vorhergehenden Ansprüche umfasst, das über den Arm (3) am Rahmen (1) montiert ist.

## Claims

1. A pneumatic leaf stripping system, in particular for stripping grape vine leaves, intended to be mounted on an agricultural machine such as a tractor, and comprising:
- a casing (2) provided with an arm (3) intended to be mounted on the agricultural machine directly or via a frame (1), comprising fixed pneumatic leaf stripping means (8, 9) each provided with at least one circular opening formed by four openings (4 to 7),
- a supply line (10) capable of supplying compressed air to the stripping means (8, 9), and allow stripping by the stripping means (8, 9) by projecting compressed air by the stripping means through said opening (4, 7) provided in the casing (2),
- adjustment means comprising a rotary connection (11) and means for rotating (15) the casing (2),
- said arm (3) having a main longitudinal axis and comprising the supply line (10) and an attachment part for the arm (3) for mounting on the agricultural machine directly or via a frame (1),
- said supply line (10) being guided along said attachment part for the arm (3) and is connected to the stripping means (8, 9) through a connection in the casing (2) via said rotary connection (11),
- said means for rotating (15) being configured to allow the casing (2) to rotate about a first axis passing through said connection and substantially perpendicular to the main longitudinal axis of the arm (3), between at least two distinct angular positions with respect to said first axis,
- said means for rotating (15) comprise a longitudinal member extending between a first point of non-rigid attachment to the casing (2) located at a non-zero distance from said axis passing through the connection, and at least one second point of attachment to the arm (3) the second point of attachment being able to assume at least two distinct positions corresponding to the two distinct angular positions of the casing (2), and the connection at the first point of attachment allows at least rotation of the longitudinal member with respect to the casing (2) about a second axis parallel to the first axis.

2. The system according to claim 1, **characterized in that** it comprises lockable release means (17, 18) capable, in a blocking configuration, of blocking the casing (2) in either of the two distinct angular positions, and in a release configuration, allowing the casing (2) to pass from one to the other of the two distinct angular positions by rotation about an axis passing through the connection.

3. The system according to any one of claims 1 or 2, **characterized in that** the longitudinal member of the means for rotating (15) is of variable length, such as a hydraulic cylinder, able to change in length to move the casing (2) from one to the other of the two distinct angular positions.

4. The system according to any one of claims 1 to 3, **characterized in that** the casing (2) is capable of passing from one to the other of the two distinct angular positions automatically via control means.

5. An agricultural machine such as a tractor, comprising a frame (1) for mounting an auxiliary device, **characterized in that** it comprises at least one stripping system according to any one of the preceding claims mounted on the frame (1) via the arm (3).
